Europäisches Patentamt

European Patent Office

Office européen des brevets

(11) Veröffentlichungsnummer: **0 545 283 A1**

# (12) EUROPÄISCHE PATENTANMELDUNG

(21) Anmeldenummer: **92120173.7**

(22) Anmeldetag: **26.11.92**

(51) Int. Cl.5: **C02F 1/26**

(30) Priorität: **05.12.91 DE 4140062**

(43) Veröffentlichungstag der Anmeldung:
**09.06.93 Patentblatt 93/23**

(84) Benannte Vertragsstaaten:
**AT BE CH DE DK ES FR GB IT LI LU NL SE**

(71) Anmelder: **HOECHST AKTIENGESELLSCHAFT
Postfach 80 03 20
W-6230 Frankfurt am Main 80(DE)**

(72) Erfinder: **Diekhaus, Gerhard, Dr. Dipl.-Chem.
Walsumermarkstrasse 89
W-4200 Oberhausen(DE)**
Erfinder: **Kappesser, Harald
Waidmannsweg 24
W-4200 Oberhausen(DE)**

(54) Verfahren zur Aufarbeitung von Rhodiumverbindungen, Derivate organischer Phosphine und weitere Verunreinigungen gelöst enthaltender Abwässer.

(57) Abwässer, die Rhodiumverbindungen, wasserlösliche Derivate organischer Phosphine sowie gegebenenfalls weitere Verunreinigungen enthalten, werden zur Aufarbeitung zunächst mit einer anorganischen Säure versetzt und darauf mit einem in Wasser unlöslichen Amin extrahiert. Nach einer besonderen Ausführungsform wird die anorganische Säure in Form eines Salzes des als Extraktionsmittel verwendeten Amins angewandt.

EP 0 545 283 A1

Die Erfindung betrifft ein Verfahren zur Aufarbeitung von Abwässern, die Rhodiumverbindungen, wasserlösliche Derivate organischer Phosphine, ferner Arylsulfonate und/oder Carboxylate sowie gegebenenfalls weitere organische Verunreinigungen gelöst enthalten. Sein Ziel ist es, das Rhodium annähernd vollständig abzutrennen und die gelösten Phosphorverbindungen sowie die anderen organischen Verunreinigungen soweit zu entfernen, daß das Abwasser nach Möglichkeit in konventionelle Reinigungsanlagen, in Flußläufe oder andere Vorfluter eingeleitet oder als Prozeßwasser in chemische Umsetzungen zurückgeführt werden kann.

Abwässer, die unter anderem Rhodiumverbindungen und organische Phosphorverbindungen gelöst enthalten, treten bei verschiedenen industriell ausgeübten Verfahren auf. So bilden Rhodiumkomplexverbindungen, die organische Phosphine als Liganden enthalten, zusammen mit überschüssigen Komplexliganden ein wasserlösliches Katalysatorsystem, dessen Löslichkeit auf der Anwesenheit sulfonierter oder auch carboxylierter Arylreste in den organischen Phosphinen beruht. Nach dem in der DE 26 27 354 B1 beschriebenen Verfahren setzt man es mit Erfolg zur Hydroformylierung von Olefinen ein. Das aktive Katalysatorsystem entsteht unter Reaktionsbedingungen aus Rhodium oder einer Rhodiumverbindung, den in Form der Alkali-, Ammonium- oder Erdalkalisulfonate verwendeten Triarylphosphinen und Synthesegas. Aus der EP 0 176 398 A ist es bekannt, in Gegenwart des genannten Katalysatorsystems cyclische Amine an konjugierte Diene zu addieren, und weiterhin wird es mit Erfolg zur Hydrierung organischer Verbindungen eingesetzt.

Bei längerem Gebrauch nehmen Aktivität und Selektivität derartiger Katalysatorsysteme ab. Diese Qualitätsminderung ist im Fall der Hydroformylierungsreaktion z. B. auf Katalysatorgifte wie Eisencarbonyl, das sich durch Einwirken von Synthesegas auf die Transportleitungen und den Reaktorwerkstoff bilden kann, und auf höhersiedende Kondensationsprodukte der Aldehyde zurückzuführen. Auch die Verringerung der Konzentration des überschüssig eingesetzten sulfonierten Phosphins durch Oxidation zu Phosphinoxiden, durch Abbau zu aromatischen Sulfonsäuren oder durch Reduktion von Sulfogruppen bzw. Reaktion mit schwefelhaltigen Verunreinigungen des Synthesegases zu Phosphinsulfiden führt zur Abnahme der Wirksamkeit der Katalysatoren. Es ist daher erforderlich, von Zeit zu Zeit die verbrauchte durch frische Katalysatorlösung zu ersetzen und aus der verbrauchten Lösung das Rhodium abzutrennen und zurückzugewinnen. Die Abtrennung des Edelmetalls soll dabei möglichst vollständig und in einer Form erfolgen, die seine Wiederverwendung als Katalysatorkomponente gestattet. Denn die Wirtschaftlichkeit des Verfahrens hängt in hohem Maße davon ab, die Rhodiumverluste möglichst gering zu halten.

Aus der DE 36 26 536 A1 ist ein Verfahren zur Rückgewinnung von Rhodium aus Rhodiumkomplexverbindungen und gegebenenfalls überschüssige Komplexliganden enthaltenden wäßrigen Lösungen bekannt. Es besteht darin, daß man der Lösung ein wasserlösliches Salz einer Carbonsäure mit 7 bis 22 Kohlenstoffatomen im Überschuß, bezogen auf Rhodium, zusetzt, die Lösung darauf bei 50 bis 200°C mit einem Oxidationsmittel behandelt und das als in Wasser schwerlösliche Verbindung abgeschiedene Rhodium abtrennt. Auf diese Weise können etwa 90 bis 95 % des in der Lösung vorhandenen Rhodiums wiedergewonnen werden. Als Oxidationsmittel dienen Sauerstoff, Luft oder Wasserstoffperoxid.

In der DE 37 44 214 A1 ist eine Weiterentwicklung der vorstehend geschilderten Arbeitsweise beschrieben. Die oxidative Behandlung der Lösungen erfolgt in zwei Stufen, jeweils in Gegenwart eines wasserlöslichen Salzes einer Carbonsäure mit 7 bis 22 Kohlenstoffatomen. In der ersten Stufe setzt man die Lösungen bei 80 bis 140°C mit Sauerstoff oder einem sauerstoffhaltigen Gas und in der zweiten Stufe bei 50 bis 140°C mit Hypochlorit um. Das Verfahren ermöglicht es, etwa 95 % des in den Lösungen vorhandenen Rhodiums wiederzugewinnen.

Auch die DE 38 33 427 A1 betrifft ein Verfahren zur Rückgewinnung von Rhodium aus Rhodiumkomplexverbindungen und gegebenenfalls Komplexliganden enthaltenden wäßrigen Lösungen durch einstufige oder zweistufige Behandlung der Lösungen mit Oxidationsmitteln in Gegenwart eines wasserlöslichen Salzes einer Carbonsäure mit 7 bis 22 Kohlenstoffatomen im Überschuß, bezogen auf Rhodium. Die wäßrigen Lösungen werden gleichzeitig oder nacheinander mit Wasserstoffperoxid oder einer Wasserstoffperoxid bildenden Substanz und mit Sauerstoff oder einem sauerstoffhaltigen Gas behandelt. 94 bis 98 % des ursprünglich vorhandenen Rhodiums werden auf diesem Wege aus den wäßrigen Lösungen abgetrennt.

Bei den oben beschriebenen Verfahren fällt das Rhodium als in Wasser schwerlösliche Verbindung an, die mit einem organischen Lösungsmittel extrahiert werden kann. Im Wasser verbleiben im wesentlichen noch Restmengen Rhodium, sowie wasserlösliche organische Phosphorverbindungen, deren Hauptanteil sulfonierte Arylphosphinoxide, sulfonierte Arylphosphinsulfide, sulfonierte Arylphosphinsäuren, sind, ferner Arylsulfonsäuren und Carbonsäuren. Die vorstehende Aufzählung im Abwasser enthaltener Verunreinigungen ist lediglich beispielhaft und keineswegs vollständig. Weitere wasserlösliche Stoffe können sich in Abhängigkeit von den Reaktanten und den Reaktionsbedingungen bilden.

Aufgabe der Erfindung ist es, aus der nach der Abtrennung des Rhodiums verbleibenden Wasserphase weiteres Rhodium zu gewinnen und gleichzeitig den Gehalt an Phosphorverbindungen und anderen organischen Verunreinigungen soweit zu reduzieren, daß das Wasser nach Möglichkeit in konventionelle Reinigungsanlagen oder Vorfluter eingeleitet oder, um Abwässer ganz oder teilweise zu vermeiden, in chemische Umsetzungen zurückgeführt werden kann.

Erfindungsgemäß wird die Aufgabe gelöst durch ein Verfahren zur Aufarbeitung von Abwässern, die Rhodiumverbindungen, wasserlösliche Derivate organischer Phosphine, ferner Arylsulfonate und/oder Carboxylate sowie gegebenenfalls weitere organische Verunreinigungen enthalten. Es ist dadurch gekennzeichnet, daß man den Abwässern eine anorganische Säure in einer solchen Menge zusetzt, daß je mol in Lösung vorhandener Sulfonatreste (-SO$_3^-$) und/oder Carboxylatreste (-COO$^-$) mindestens 1,1 mol Wasserstoffionen vorliegen, darauf mit mindestens einem mol eines in Wasser schwer oder unlöslichen Amins je mol gelöster Sulfonatreste und/oder Carboxylatreste extrahiert, organische und Wasserphase voneinander trennt und die organische Phase weiterverarbeitet.

Das erfindungsgemäße Verfahren stellt sicher, daß im Abwasser gelöste Rhodiumverbindungen, organische Phosphorverbindungen, ferner Salze aromatischer Sulfonsäuren, und/oder Salze von Carbonsäuren und weitere organische Verunreinigungen, die insgesamt den CSB-Wert ergeben, weitgehend entfernt werden. Die gereinigten Abwässer belasten die Umwelt nicht und können als Prozeßwasser für chemische Umsetzungen verwendet werden.

Das erfindungsgemäße Verfahren geht von Abwässern aus, die anfallen, wenn Rhodium und wasserlösliche, organische Phosphinderivate aus wäßrigen, als Katalysatorphase dienenden Lösungen abgetrennt werden. Welcher Trennprozeß im Einzelfall angewendet wird, ist dabei ohne Bedeutung. Die im Rahmen der Schilderung des Standes der Technik genannten Verfahren sind lediglich als Beispiele aufgeführt, andere Trenn- und Aufarbeitungsverfahren sind möglich. Ein wesentliches Merkmal der erfindungsgemäß eingesetzten Abwässer ist Art und Konzentration der in ihnen gelösten Stoffe. Auf Grund ihres wirtschaftlichen Wertes oder ihres Einflusses auf die Umwelt wichtig sind insbesondere Rhodium, dessen Konzentration in typischen Abwässern zwischen 1 und 50 Gew.-ppm, insbesondere 3 und 30 Gew.-ppm, beträgt, wasserlösliche Phosphorverbindungen, die in einer Konzentration von 0,5 bis 1,5 Gew.-%, insbesondere 0,7 bis 1,2 Gew.-% Phosphor, Sulfonsäuren, die in einer Konzentration von 1,0 bis 2,5 Gew.-%, insbesondere 1,4 bis 2,0 Gew.-%, Carbonsäuren, die in einer Konzentration von 2,0 bis 4,0 Gew.-%, insbesondere 2,5 bis 3,5 Gew.-% vorliegen. Stofflich handelt es sich bei dem im Abwasser gelösten Rhodium um Rhodiumsalze; die Phosphorverbindungen sind überwiegend sulfonierte oder carboxylierte Arylphosphinoxide und Arylphosphinsulfide; die Sulfonsäuren werden hauptsächlich durch Spaltung sulfonierter Arylphosphine erhalten und sind dementsprechend Arylsulfonate; der Gehalt an Carbonsäuren beruht im wesentlichen auf der Zugabe von Carboxylaten bei der vorangegangenen Rhodiumrückgewinnung. Die vorgenannten Substanzen eingeschlossen enthalten die Abwässer insgesamt 200 bis 350 g/l, insbesondere 230 bis 290 g/l Verbindungen, die den CSB-Wert ergeben. Der CSB-Wert, die Abkürzung CSB steht für chemischen Sauerstoffbedarf, ist eine Kenngröße für den Verschmutzungsgrad von Abwässern. Sie ist die als Sauerstoff-Äquivalent ausgedrückte Menge Kaliumdichromat, die von den oxidierbaren Inhaltsstoffen eines Liters Wasser verbraucht wird. Die Bestimmung des CSB-Wertes erfolgt nach einer normierten Arbeitsweise. Sie ist z.B. in Ullmanns Encyclopädie der Technischen Chemie, 4. Auflage (1981) Band 6, Seite 376 ff. beschrieben.

Die nach dem neuen Verfahren aufzuarbeitenden Abwässer werden zunächst angesäuert. Zu diesem Zweck versetzt man sie erfindungsgemäß mit einer solchen Menge einer anorganischen Säure, daß je mol in Lösung vorhandener Sulfonatreste und/oder Carboxylatreste mindestens 1,1 mol, insbesondere 1,2 bis 3,5 mol Wasserstoffionen vorliegen. Ein höherer Säureüberschuß ist nicht schädlich, aber z.B. aus wirtschaftlichen Gründen, insbesondere aber auch um eine unnötige Belastung der Abwässer zu vermeiden, nicht erforderlich. Ist in den Abwässern neben Sulfonaten und/oder Carboxylaten noch freie Base vorhanden, so ist die zu ihrer Neutralisation erforderliche Menge Wasserstoffionen zu der erfindungsgemäß anzuwendenden Menge Wasserstoffionen zu addieren.

Die Bestimmung der Sulfonatreste kann z.B. durch Hochdruck-Flussigkeitschromatographie (HPLC) erfolgen. Carboxylate lassen sich z.B. potentiometrisch mit Mineralsäuren oder nach Überführung in die freien Säuren und Extraktion gaschromatographisch bestimmen.

Die Wasserstoffionen werden den Abwässern in Form starker anorganischer Säuren wie Salzsäure, Schwefelsäure, Salpetersäure und Phosphorsäure zugeführt. Besonders geeignet sind Schwefelsäure und Phosphorsäure. Bei Einsatz mehrbasiger Säuren wie Schwefelsäure oder Phosphorsäure ist die Menge der in das Abwasser eingebrachten Wasserstoffionen abhängig von der Säurekonstante der einzelnen Dissoziationsstufen. Man kann davon ausgehen, daß bis zu einer Säurekonstante von etwa $0,7 \cdot 10^{-2}$ eine vollständige Dissoziation der Wasserstoffionen erfolgt, also ein mol Säure ein mol Wasserstoffionen ergibt. Dementsprechend liefert ein mol Schwefelsäure als zweibasige Säure und einer Säurekonstante in der zweiten Dissoziationsstufe von 1,2 . $10^{-2}$ zwei mol Wasserstoffionen, während die dreibasige Phosphorsäure entsprechend der Säurekonstante in der ersten Dissoziationsstufe von 0,75 . $10^{-2}$ lediglich ein mol Wasserstoffionen ergibt.

Nach dem Ansäuern werden in einem zweiten Arbeitsschritt Rhodium und die in den Abwässern enthaltenen Verunreinigungen mit Hilfe eines Amins extrahiert, das in Wasser schwer oder nicht löslich ist. Die erforderliche Aminmenge ist ebenfalls abhängig von der Menge im Abwasser enthaltener Sulfonatreste und/oder Carboxylatreste. Je mol in der Lösung vorhandener Sulfonatreste und/oder Carboxylatreste setzt man dem Abwasser mindestens ein mol Amin zu. Die Anwendung überschüssigen Amins ist möglich, sie ergibt jedoch keine Vorteile.

Statt den Abwässern zunächst Säure zuzusetzen und darauf die Verunreinigungen mit einem Amin zu extrahieren, kann man nach einer besonderen Ausführungsform des erfindungsgemäßen Verfahrens die benötigte Säure- und Aminmenge in Form eines Aminsalzes zugeben. Selbstverständlich sind in diesem Fall die verwendeten molaren Stoffmengen von Säure und Amin gleich. Da die Säure immer im Überschuß, bezogen auf gelöstes Sulfonat und/oder Carboxylat verwendet wird, liegt dann auch stets ein Aminüberschuß vor.

Zweckmäßig ist das zur Extraktion verwendete Amin unter den Bedingungen der Extraktion flüssig. Seine Wirkung beruht u.a. darauf, daß es mit den sauren Inhaltsstoffen des Abwassers unter Salzbildung reagiert. Die Aminsalze müssen in Wasser ebenfalls schwer, dagegen in organischen Lösungsmitteln leicht löslich sein. Eine andere Wirkungsweise des Amins beruht auf der rein physikalischen Lösung von in den Abwässern enthaltenen Verunreinigungen.

Als Amine, die mit Säuren in Wasser schwerlösliche, jedoch lipophile Salze bilden, kommen acyclische oder cyclische aliphatische, aromatische, araliphatische und heterocyclische primäre, sekundäre oder tertiäre, vorzugsweise sekundäre oder tertiäre Amine in Betracht. Bevorzugt werden acyclische, verzweigte oder unverzweigte aliphatische Amine mit insgesamt 10 bis 60, insbesondere 13 bis 36 Kohlenstoffatomen. Beispiele für solche Verbindungen sind Tri-n-hexylamin, Tri-n-octylamin, Tri-isooctylamin, Di-2-ethylhexylamin, Tri-isononylamin (in Form des Isomerengemisches), Isotridecylamin (in Form des Isomerengemisches), Di-isononyl-2-phenylpropylamin, Isononyl-di-2-phenylpropylamin, Tri-isotridecylamin (in Form des Isomerengemischs), N,N-dimethyl-hexadecylamin, N,N-dimethyl-octadecylamin. Als Extraktionsmittel besonders bewährt haben sich Isotridecylamin, Tri-n-octylamin und Tri-isooctylamin.

Grundsätzlich können die Amine zur Extraktion unverdünnt eingesetzt werden. Vorteilhafter ist es jedoch, sie als Lösung in einem mit Wasser nicht oder nur wenig mischbaren organischen Lösungsmittel zu verwenden. Die Konzentration des Amins in der Lösung kann sich über einen weiten Bereich erstrecken. Sie wird im wesentlichen durch die Löslichkeit der Aminsalze im Lösungsmittel und durch die Viskosität der anfallenden Salzlösung begrenzt. Dementsprechend enthalten die Lösungen üblicherweise 10 bis 50, vorzugsweise 15 bis 35 Gew.-% Amin. Für die Auswahl des Lösungsmittels sind vorwiegend seine physikalischen Eigenschaften maßgebend. Erwünscht sind geringe Löslichkeit in Wasser, geringe Verdunstung und geringe oder keine Neigung zur Bildung von Emulsionen. Das Lösungsmittel soll darüber hinaus inert, nicht toxisch und preisgünstig sein, gutes hydrodynamisches Verhalten zeigen und auch für sonstige in den Abwässern gelöste Verunreinigungen gutes Extraktionsvermögen besitzen. Geeignete Lösungsmittel sind kerosinähnliche Fraktionen, Aromatenfraktionen, $C_4$-$C_{20}$-Alkohole, $C_8$-$C_{20}$-Ether. Bevorzugt werden kerosinähnliche Fraktionen, d.h. Kohlenwasserstoffe mit Siedetemperaturen zwischen 175 und 325°C und Toluol. Aminsalze werden stets in Form von Lösungen eingesetzt, wobei dieselben Lösungsmittel wie für die Amine zur Anwendung gelangen. Die Konzentration der Salze in der Lösung beträgt ebenfalls üblicherweise 10 bis 50, vorzugsweise 15 bis 35 Gew.-%.

Die Extraktion erfolgt in der Regel bei normaler Temperatur und normalem Druck, jedoch sind hiervon abweichende Bedingungen, z.B. erhöhter Druck, nicht ausgeschlossen.

Die Weiterverarbeitung der organischen Phase in einem dritten Arbeitsschritt zur Rückgewinnung des Rhodiums, Überführung der Verunreinigungen in eine konzentrierte wäßrige Lösung und die Regenerierung des Amins kann auf verschiedene Weise erfolgen. So hat es sich bewährt, die Aminphase mit der wäßrigen Lösung einer anorganischen Base zu reextrahieren. Geeignete Verbindungen sind die Hydroxide der Alkali- und Erdalkalimetalle, insbesondere Natriumhydroxid, daneben auch die Alkalicarbonate. Die Base wird als 5 bis 30 Gew.-%ige Lösung eingesetzt und, bezogen auf Amin, vorzugsweise in stöchiometrischer Menge, gegebenenfalls in einem Überschuß bis zu 20 %, verwendet. Ein größerer Überschuß an Base fügt der wäßrigen Lösung, die die Verunreinigungen in konzentrierter Form enthaltene, einen weiteren, unerwünschten Lösungsbestandteil zu und sollte daher vermieden werden. Ein anderes, erfolgreich angewandtes Verfahren zur Aufbereitung der Aminphase ist ihre Behandlung mit Dampf. Zu diesem Zweck wird Dampf von mindestens 1,8 MPa in die Aminlösung eingeleitet. Rhodium und die Verunreinigungen gehen dabei in die Wasserphase über, die z.B. durch Dekantieren von der Aminphase getrennt wird.

Das nach der Behandlung mit einer Base oder mit Dampf wiedergewonnene Amin kann zusammen mit dem gegebenenfalls eingesetzten Lösungsmittel erneut zur extraktiven Behandlung von Abwässern nach dem erfindungsgemäßen Verfahren eingesetzt werden. Von Zeit zu Zeit kann es, ebenso wie das Lösungsmittel, z.B. durch Destillation gereinigt werden.

Das Rhodium wird aus der wäßrigen Lösung nach bekannten Verfahren, z.B. als schwerlösliches carbonsaures Salz abgetrennt, die die Verunreinigungen in konzentrierter Form enthaltende wäßrige Lösung wird entsorgt.

Das erfindungsgemäße Verfahren wird diskontinuierlich und vorzugsweise kontinuierlich ausgeführt, wobei die für extraktive Stofftrennungen üblichen Apparate wie Extraktionskolonnen und Mixer-settler angewandt werden. Man kann ein- und mehrstufig arbeiten.

Die nachfolgenden Beispiele beschreiben die Erfindung, beschränken sie jedoch nicht auf diese speziellen Ausführungsformen.

Beispiele 1 bis 7

In den folgenden Beispielen werden Abwässer A, B, C und D eingesetzt, deren Inhaltsstoffe in Tabelle 1 zusammengestellt sind.

Abwasser, Schwefelsäure (29,9 Gew.-%, bezogen auf die wäßrige Lösung) und eine Lösung von Tri-isooctylamin in Toluol (etwa 20 Gew.-%, bezogen auf die Lösung) als Extraktionsmittel werden nacheinander in einen Rührwerksreaktor gegeben. Man rührt 30 min bei Raumtemperatur und trennt darauf die Wasserphase, d.h. das gereinigte Abwasser, von der Aminphase. Die Aminphase wird durch 30 min Rühren mit wäßriger NaOH-Lösung reextrahiert. Die nach Phasentrennung anfallende Wasserphase enthält konzentriert nahezu sämtliche Verunreinigungen des Abwassers, die Aminphase kann erneut als Extraktionsmittel eingesetzt werden. Die Reaktionsbedingungen und die Ergebnisse der Abwasseraufarbeitung sind in Tabelle 2 zusammengefaßt.

Die Beispiele 1 bis 5 beschreiben das neue Verfahren, in den Beispielen 6 und 7 wurde unter Bedingungen gearbeitet, die nicht denen der Erfindung entsprechen.

EP 0 545 283 A1

<u>T a b e l l e    1</u>

| Abwasser | CSB-Stoffe[1] (g/l) | Rh (gew.-ppm) | P (Gew.-ppm) | phosphorfreie Carboxylat-reste (Gew.-%) | Sulfonat-reste (Gew.-%) | P-sulfonate[2] (g-Äquiv./kg Abwasser) |
|---|---|---|---|---|---|---|
| A | 238 | 5,26 | 7100 | 2,7 | 1,46 | 0,60 |
| B | 269 | 5,33 | 8200 | 3,0 | 1,72 | 0,80 |
| C | 267 | 4,78 | 7500 | 2,9 | 1,51 | 0,71 |
| D | 285 | 5,37 | 8900 | 2,5 | 1,94 | 0,85 |

[1] Inhaltsstoffe, die in Form des CSB-Wertes gemessen werden

[2] sulfonierte Arylphosphine, -phosphinoxide, -phosphinsulfide

Tabelle 2

| Beispiel | Abwasser | $\frac{\text{H}_2\text{SO}_4 \text{ (mol)}}{\text{Sulfonat- u. Carboxylatreste (mol)}}$ | $\frac{\text{Amin (mol)}}{\text{Sulfonat- u. Carboxylatreste (mol)}}$ | gereinigtes Abwasser (Abnahme der Inhaltsstoffe in %, bezogen auf unbehandeltes Abwasser) | | |
|---|---|---|---|---|---|---|
| | | | | Rh | P | CSB-Wert |
| 1 | A | 1,58 | 3,28 | 98,2 | 99,0 | 99,4 |
| 2 | B | 0,71 | 1,19 | 98,5 | 98,0 | 98,8 |
| 3 | C | 0,87 | 1,30 | 97,8 | 98,8 | 99,1 |
| 4 | C | 0,70 | 1,41 | 93,1 | 99,2 | 99,4 |
| 5 | D | 0,70 | 2,38 | 98,1 | 97,8 | 98,2 |
| 6 (Vergleich) | A | 0,52 | 0,74 | 63,9 | 82,2 | 86,5 |
| 7 (Vergleich) | D | 0,50 | 1,20 | 65,2 | 75,8 | 82,9 |

Beispiele 8 bis 10

Die Beispiele 8 bis 10 wurden in der gleichen Weise wie die Beispiele 1 bis 7 durchgeführt, jedoch unter Verwendung von Salzen des Tri-isooctylamins (Beispiel 8: Sulfat; Beispiel 9: Hydrogensulfat; Beispiel 10: Dihydrogenphosphat) anstelle von Säure und Amin. Sie gelangten als Lösung in Toluol (etwa 20 Gew.-% Salz, bezogen auf die Lösung) zur Anwendung.

T a b e l l e   3

| Bei-spiel | Abwas-ser | Säure (mol) / Sulfonat- u. Carboxylat-reste (mol) | Amin (mol) / Sulfonat- u. Carboxylat-reste (mol) | gereinigtes Abwasser (Abnahme der Inhaltstoffe in % bezogen auf unbehandeltes Abwasser) | | |
|---|---|---|---|---|---|---|
| | | | | Rh | P | CSB-Wert |
| 8 | D | 0,60 | 1,20 | 90,7 | 96,0 | 98,3 |
| 9 | D | 1,20 | 1,20 | 93,4 | 96,0 | 98,2 |
| 10 | D | 1,20 | 1,20 | 95,0 | 98,0 | 97,8 |

**Patentansprüche**

1. Verfahren zur Aufarbeitung von Abwässern, die Rhodiumverbindungen, wasserlösliche Derivate organischer Phosphine, ferner Arylsulfonate und/oder Carboxylate sowie gegebenenfalls weitere organische Verunreinigungen gelöst enthalten, dadurch gekennzeichnet, daß man den Abwässern eine anorganische Säure in einer solchen Menge zusetzt, daß je mol in Lösung vorhandener Sulfonatrest ($-SO_3^-$) und/oder Carboxylatrest ($-COO^-$) mindestens 1,1 mol Wasserstoffionen vorliegen, darauf mit mindestens einem mol eines in Wasser schwer oder unlöslichen Amins je mol gelöster Sulfonatrest und/oder Carboxylatrest extrahiert, organische und Wasserphase voneinander trennt und die organische Phase weiterverarbeitet.

2. Verfahren nach Anspruch 1, dadurch gekennzeichnet, daß in den Abwässern 1,2 bis 3,5 mol Wasserstoffionen je mol gelöster Sulfonatreste und/oder Carboxylatreste vorliegen.

3. Verfahren nach Anspruch 1 oder 2, dadurch gekennzeichnet, daß man als anorganische Säure Schwefelsäure oder Phosphorsäure einsetzt.

4. Verfahren nach einem oder mehreren der Ansprüche 1 bis 3, dadurch gekennzeichnet, daß man mit einem acyclischen verzweigten oder unverzweigten, sekundären oder tertiären aliphatischen Amin mit insgesamt 10 bis 60, insbesondere 13 bis 36 Kohlenstoffatomen extrahiert.

5. Verfahren nach Anspruch 4, dadurch gekennzeichnet, daß man als Amin Tri-isooctylamin einsetzt.

6. Verfahren nach Anspruch 1, dadurch gekennzeichnet, daß man den Abwässern anorganische Säure und Amin in Form eines Aminsalzes zusetzt.

7. Verfahren nach einem oder mehreren der Ansprüche 1 und 4 bis 6, dadurch gekennzeichnet, daß das Amin oder das Aminsalz in einem organischen Lösungsmittel gelöst sind.

8. Verfahren nach Anspruch 7, dadurch gekennzeichnet, daß das Amin oder das Aminsalz in kerosinähnlichen Fraktionen oder in Toluol gelöst ist.

9. Verfahren nach einem oder mehreren der Ansprüche 1 und 4 bis 8, dadurch gekennzeichnet, daß die Konzentration des Amins oder des Aminsalzes in dem Lösungsmittel 10 bis 50, insbesondere 15 bis 35 Gew.-%, bezogen auf die Lösung beträgt.

10. Verfahren nach Anspruch 1, dadurch gekennzeichnet, daß die organische Phase durch Behandlung mit einem Alkali- oder Erdalkalihydroxid oder einem Alkalicarbonat oder durch Behandlung mit Dampf von mindestens 1,8 MPa weiterverarbeitet wird.

Europäisches
Patentamt

# EUROPÄISCHER RECHERCHENBERICHT

Nummer der Anmeldung

EP    92 12 0173

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 103 845 (RUHRCHEMIE AG) <br> * Seite 5, Zeile 5 - Seite 8, Zeile 13 * <br> * Seite 9, Zeile 13 - Zeile 15 * <br> --- | 1-10 | C02F1/26 |
| X | EP-A-0 293 849 (HOECHST AG) <br> * Seite 2, Zeile 45 - Seite 3, Zeile 6 * <br> * Seite 3, Zeile 42 - Zeile 53; Beispiel 10 * <br> --- | 3-6,9,10 | |
| A | US-A-4 340 570 (W.C.DAVIDSON) <br> * Spalte 7, Zeile 40 - Zeile 56 * <br> * Spalte 8, Zeile 14 - Zeile 65; Anspruch 1 * <br> --- | 1 | |
| A | EP-A-0 445 347 (HENKEL RESEARCH CORPORATION) <br> * Zusammenfassung * <br> ----- | 1,3,4 | |

| RECHERCHIERTE SACHGEBIETE (Int. Cl.5 ) |
|---|
| C02F |

Der vorliegende Recherchenbericht wurde für alle Patentansprüche erstellt

| Recherchenort | Abschlußdatum der Recherche | Prüfer |
|---|---|---|
| DEN HAAG | 12 MAERZ 1993 | GONZALEZ ARIAS,M.L. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.................................................................................
& : Mitglied der gleichen Patentfamilie, übereinstimmendes
    Dokument

EPO FORM 1503 03.82 (P0403)